# EUROPÄISCHE PATENTSCHRIFT

(11) **EP 4 179 396 B1**
(45) Veröffentlichungstag und Bekanntmachung des Hinweises auf die Patenterteilung: **14.08.2024**
(21) Anmeldenummer: 20771228.2
(22) Anmeldetag: 03.09.2020
(51) Int. Cl.: G05B 19/416, H02K 15/02, B21D 43/22, B21D 28/06

(54) **VERFAHREN ZUM BETREIBEN EINER MIT EINEM SERVOMOTOR ANGETRIEBENEN VERDREHSTATION EINES PAKETIERWERKZEUGS FÜR EINE STANZPRESSE**
METHOD FOR OPERATING A TURNING STATION, DRIVEN BY A SERVOMOTOR, OF A PACKETIZING TOOL FOR A PUNCH PRESS
PROCÉDÉ DE FONCTIONNEMENT D'UN POSTE DE RETOURNEMENT, ENTRAÎNÉ PAR UN SERVOMOTEUR, D'UN OUTIL DE MISE EN PAQUETS POUR UNE PRESSE À POINÇONNER

(43) Veröffentlichungstag der Anmeldung: 17.05.2023
(73) Patentinhaber: Bruderer AG, 9320 Frasnacht (CH)
(72) Erfinder: HAFNER, Josef, Thomas, 9404 Rorschacherberg (CH); HÖGGER, Herbert, 6840 Götzis (AT); BÜHLER, Manuel, 9320 Arbon (CH)
(74) Vertreter: E. Blum & Co. AG
(86) Internationale Anmeldenummer: PCT/EP2020/074551
(87) Internationale Veröffentlichungsnummer: WO 2022/048750

(56) Entgegenhaltungen:
- JP-B2- 4 355 520
- US-A- 5 915 750
- US-A1- 2010 052 463
- US-A1- 2019 163 209

## Beschreibung

### Technisches Gebiet

Die vorliegende Erfindung betrifft ein Verfahren zum Betreiben einer mit einem Servomotor angetriebenen Verdrehstation eines Paketierwerkzeugs für eine Stanzpresse sowie eine Stanzpresse mit einem Paketierwerkzeug mit einer von einem Servomotor angetriebenen Verdrehstation gemäss den Oberbegriffen der unabhängigen Patentansprüche.

### Stand der Technik

Bei der Produktion von Elektromotoren in Grossserien ist das Stanzpaketieren zur Herstellung der Blechpakete für den Rotor und den Stator nicht mehr wegzudenken. Dabei werden die einzelnen Bleche in einer Stanzpresse aus einem Metallband ausgestanzt und in Paketierwerkzeugen aufgestapelt und miteinander zu Blechpaketen der gewünschten Höhe verbunden. Um zu verhindern, dass allfällige über die Bandbreite hinweg bestehende Blechdickenunterschiede zu schiefen Blechpaketen führen, werden die Blechstapel vor dem Auflegen jedes neuen Bleches mit einer Verdrehstation des jeweiligen Paketierwerkzeugs um ein bestimmtes Drehinkrement verdreht. Hierdurch gleichen sich allfällige Blechdickenunterschiede beim Aufstapeln automatisch aus. Bei den heute üblichen Stanzgeschwindigkeiten und servomotorisch angetriebenen Verdrehstationen stellt dieses Verdrehen jedoch eine Herausforderung dar, weil die Blechpakete relativ grosse Massenträgheiten aufweisen und nur sehr wenig Zeit zur Verfügung steht um das jeweilige Blechpaket mit der Verdrehstation zu beschleunigen und wieder abzubremsen.

Insbesondere für den Fall, dass auf einer Stanzpresse mit dem gleichen Werkzeug sowohl die Rotorals auch die Statorblechpakete eines Elektromotors hergestellt werden, ergeben sich für die Verdrehstationen der einzelnen Paketierwerkzeuge stark unterschiedliche Betriebsparameter, da die Massen und rotatorischen Trägheitsmomente aufgrund der verschiedenen Gewichte und Durchmesser der Blechpakete sehr unterschiedlich sind. So ist es nicht unüblich, dass die Drehmassenträgheit einer Verdrehstation mit einem Rotor-Blechpaketstapel um ein bis zwei Zehnerpotenzen kleiner ist als die Drehmassenträgheit einer Verdrehstation mit dem dazugehörigen Stator-Blechpaketstapel. Dies führt dazu, dass es in der Praxis sehr viel Zeit und Erfahrung braucht, die Verdrehstationen iterativ auf den jeweiligen Produktionsauftrag einzustellen und dass die Verdrehstationen trotzdem in den meisten Fällen mit suboptimalen Bewegungsprofilen betrieben werden, bei denen unnötig grosse Beschleunigungen und/oder Verzögerungen zum Einsatz kommen, weil eine gezielte Bewegungsprofileinstellung nicht möglich ist und es in jedem Fall sicherzustellen gilt, dass das jeweilige Drehinkrement in der zur Verfügung stehenden Zeit abgeschlossen werden kann. Hierdurch wird jedoch unnötig Energie verbraucht und es entsteht auch unnötiger Verschleiss an den Produktionseinrichtungen. Zudem kann es durch die unnötig hohen Beschleunigungswerte zu Schwingungen im System kommen, welche das Produktionsergebnis negativ beeinflussen.

US 2010/052463 A1 gehört zum Stand der Technik.

### Darstellung der Erfindung

Es stellt sich daher die Aufgabe, eine technische Lösung zur Verfügung zu stellen, welche die zuvor erwähnten Nachteile des Standes der Technik nicht aufweist bzw. diese zumindest teilweise vermeidet.

Diese Aufgabe wird durch das Verfahren und die Stanzpresse gemäss den unabhängigen Patentansprüchen gelöst.

Gemäss diesen betrifft ein erster Aspekt der Erfindung ein Verfahren zum Betreiben einer mit einem Servomotor angetriebenen Verdrehstation eines Paketierwerkzeugs für eine Stanzpresse.

Dabei wird ein Soll-Drehbeschleunigungsverlauf der Verdrehstation in der Beschleunigungsphase des Drehinkrements festgelegt, und zwar mit Vorteil derart, dass ein möglichst energieeffizientes Bewegungsprofil ohne unnötig grosse Beschleunigungen vorgesehen wird.

Aus dem Soll-Drehbeschleunigungsverlauf werden einer oder mehrere der folgenden Soll-Parameter bestimmt:
- die Soll-Drehbeschleunigung, welche über einen bestimmten Verdrehbereich vorliegen soll;
- die Soll-Winkelgeschwindigkeit, welche bei Erreichen eines bestimmten Verdrehwinkels vorliegen soll;
- die Soll-Verdrehzeit, welche bei Erreichen eines bestimmten Verdrehwinkels verstrichen sein soll;
- der Soll-Verdrehwinkel, welcher bei Erreichen einer bestimmten Verdrehzeit vorliegen soll.

Zudem wird ein Referenz-Beschleunigungslauf der Verdrehstation durchgeführt, um das dynamische Verhalten der Verdrehstation zu ermitteln, oder, mit anderen Worten ausgedrückt, den Zusammenhang zwischen dem Antriebsmoment des Servomotors und/oder dem Speisestrom des Servomotors und der Drehbeschleunigung der Verdrehstation. Die Drehbeschleunigung der Verdrehstation kann hier auch durch eine Winkelgeschwindigkeit bei Erreichen eines bestimmten Verdrehwinkels, eine Verdrehzeit bis zum Erreichen eines bestimmten Verdrehwinkels und/oder einen Verdrehwinkel nach Verstreichen einer bestimmten Verdrehzeit ausgedrückt werden.

Für den Referenz-Beschleunigungslauf wird die Verdrehstation, welche bestimmungsgemäss mit einem Blechstapel oder einem diesen Blechstapel repräsentierenden "Dummy" versehen ist, beim Referenz-Beschleunigungslauf unter Bereitstellung eines bestimmten Referenz-Antriebsmoments durch den Servomotor bzw. unter Speisung des Servomotors mit einem bestimmten Referenz-Speisestrom beschleunigt und einer oder mehrere der folgenden Referenz-Parameter dieses Referenz-Beschleunigungslaufs ermittelt:
- die über einen bestimmten Verdrehbereich erreichte Referenz-Drehbeschleunigung der Verdrehstation oder des Servomotors;
- die bei Erreichen eines bestimmten Verdrehwinkels vorliegende Referenz-Winkelgeschwindigkeit der Verdrehstation oder des Servomotors;
- die bis zum Erreichen eines bestimmten Verdrehwinkels verstrichene Referenz-Verdrehzeit;
- der nach Verstreichen einer bestimmten Verdrehzeit vorliegenden Referenz-Verdrehwinkel;

Mit den bestimmten Soll-Parametern und den ermittelten Referenz-Parametern wird sodann über den aus dem Referenz-Beschleunigungslauf bekannten Zusammenhang zwischen der Referenz-Drehbeschleunigung, der Referenz-Winkelgeschwindigkeit, der Referenz-Verdrehzeit und/oder dem Referenz-Verdrehwinkel und dem Antriebsmoment des Servomotors und/oder dem Speisestrom des Servomotors ein Soll-Antriebsmoment des Servomotors und/oder ein Soll-Speisestroms des Servomotors berechnet, bei welchem sich im bestimmungsgemässen Betrieb die Soll-Drehbeschleunigung im bestimmten Verdrehbereich, die Soll-Winkelgeschwindigkeit bei Erreichen des bestimmten Verdrehwinkels, die Soll-Verdrehzeit bei Erreichen des bestimmten Verdrehwinkels und/oder der Soll-Verdrehwinkel nach Verstreichen der bestimmten Verdrehzeit ergibt.

Die Bestimmung der Soll-Parameter und die Ermittlung der Referenz-Parameter können grundsätzlich unabhängig voneinander erfolgen und erfordern deshalb keine festgelegte Reihenfolge. Jedoch ist es für eine einfache Verarbeitbarkeit der Soll- und Referenzparameter von Vorteil, wenn bei deren Ermittlung und Bestimmung jeweils identische bestimmte Verdrehbereiche, identische bestimmte Verdrehwinkel und/oder identische bestimmte Verdrehzeiten zur Anwendung kommen. Ansonsten können Soll- und Referenzparameter, die bei nicht identischen bestimmten Verdrehbereichen, Verdrehwinkeln und/oder Verdrehzeiten bestimmt bzw. ermittelt werden, aber trotzdem über den bekannten Zusammenhang zwischen dem Antriebsmoment des Servomotors und/oder dem Speisestrom des Servomotors und der Drehbeschleunigung, Winkelgeschwindigkeit, Verdrehzeit und/oder dem Verdrehwinkel ausgewertet bzw. verglichen werden.

Sodann wird die Verdrehstation mit dem Servomotor im normalen Produktionsbetrieb in der Beschleunigungsphase des jeweiligen Verdrehinkrements unter Bereitstellung des Soll-Antriebsmoments durch den Servomotor oder unter Speisung des Servomotors mit dem Soll-Speisestrom beschleunigt.

Mit dem erfindungsgemässen Verfahren wird es möglich, mit einem eigentlichen "Teach-In"-Betrieb die Bewegungsprofile von servomotorisch angetriebenen Verdrehstationen von Paketierwerkzeugen in kurzer Zeit und ohne viel Erfahrung gezielt einzustellen und zu optimieren.

Mit Vorteil wird ein Soll-Drehbeschleunigungsverlauf festgelegt, bei welchem die Verdrehstation in der Beschleunigungsphase des Drehinkrements im Wesentlichen gleichmässig beschleunigt wird. "Im Wesentlichen gleichmässig" ist hier dahingehend zu verstehen, dass die Beschleunigung über den Grossteil der Beschleunigungsphase gleichmässig ist, wobei es durchaus denkbar ist und auch wünschenswert sein kann, zu Beginn und am Ende der Beschleunigungsphase eine geringere Beschleunigung festzulegen bzw. sanfte Übergänge aus dem Stillstand zu Beginn der Beschleunigungsphase und an deren Ende in die Verzögerungsphase.

Auch ist es bevorzugt, dass der Referenz-Beschleunigungslaufs unter Bereitstellung des Nenn-Antriebsmoments des Servomotors als Referenz-Antriebsmoment oder unter Speisung des Servomotors mit dem Nenn-Speisestrom als Referenz-Speisestrom durchgeführt wird.

Auf diese Weise wird sofort erkennbar, wenn die festgelegten Soll-Werte vom vorhandenen Servomotor nicht umgesetzt werden können. Es ist dann eine entsprechende Senkung der Hubzahl der Presse oder die Verwendung eines stärkeren Servomotors erforderlich.

In einer bevorzugten Ausführungsform des Verfahrens wird der Verdrehwinkel der Verdrehstation pro Drehinkrement bestimmt und der Referenz-Beschleunigungslauf über einen bestimmten Teil des Verdrehwinkels durchgeführt, z.B. über den halben oder den ganzen Verdrehwinkel.

In einer anderen bevorzugten Ausführungsform des Verfahrens wird die zur Verfügung stehende Verdrehzeit pro Drehinkrement bestimmt und der Referenz-Beschleunigungslauf über einen bestimmten Teil der Verdrehzeit durchgeführt, z.B. über die halbe oder die ganze zur Verfügung stehende Verdrehzeit.

Je nachdem, welche Parameter zur Berechnung des Soll-Antriebsmoments oder des Soll-Speisestroms des Servomotors verwendet werden, kann die eine oder die andere Ausführungsform des Verfahrens vorteilhafter sein.

In einer weiteren bevorzugten Ausführungsform des erfindungsgemässen Verfahrens wird sowohl die zur Verfügung stehende Verdrehzeit pro Drehinkrement als auch der Verdrehwinkel der Verdrehstation pro Drehinkrement bestimmt, und es wird ein Soll-Drehbeschleunigungsverlauf festgelegt, gemäss welchem der halbe Verdrehwinkel bei Ablauf oder nach Ablauf der halben zur Verfügung stehenden Verdrehzeit erreicht wird.

Dabei ist bevorzugt, dass ein Soll-Drehbeschleunigungsverlauf festgelegt wird, gemäss welchem bei Erreichen oder nach Erreichen des halben Verdrehwinkels die Beschleunigungsphase des Drehinkrements abgeschlossen ist.

Auf diese Weise werden energieeffiziente Bewegungsprofile ohne unnötig grosse Beschleunigungen begünstigt.

Mit Vorteil wird bei den Verfahrensvarianten, bei denen die zur Verfügung stehende Verdrehzeit pro Drehinkrement bestimmt wird, diese Verdrehzeit pro Drehinkrement derart bestimmt, dass eine theoretisch pro Drehinkrement zur Verfügung stehende Verdrehzeit um eine Zeitspanne reduziert wird, welche am Ende der Drehbewegung für eine Beruhigung des Systems vorgesehen ist. Hierdurch kann sichergestellt werden, dass allfällige Systemschwingungen abgeklungen sind, bevor das nächste Blech auf den Blechstapel in der Verdrehstation aufgestapelt wird.

Auch ist es bei den Verfahrensvarianten, bei denen die zur Verfügung stehende Verdrehzeit pro Drehinkrement bestimmt wird, von Vorteil, dass die zur Verfügung stehende Verdrehzeit pro Drehinkrement oder die theoretisch pro Drehinkrement zur Verfügung stehende Verdrehzeit in Abhängigkeit von der Zielhubzahl der Presse oder in Abhängigkeit von der aktuellen Hubzahl der Presse bestimmt wird. In letztgenanntem Fall kann der Drehbeschleunigungsverlauf bzw. das Bewegungsprofil der Verdrehstation dynamisch an die Pressengeschwindigkeit angepasst werden, und es kann jeweils mit einem für die Betriebssituation energie- und verschleissoptimierten Bewegungsprofil gefahren werden.

In noch einer weiteren bevorzugten Ausführungsform des Verfahrens wird der Soll-Drehbeschleunigungsverlauf der Verdrehstation über das gesamte Drehinkrement festgelegt, also für die Beschleunigungsphase und die Verzögerungsphase, und zwar bevorzugterweise derart, dass direkt im Anschluss an die Beschleunigungsphase die Verzögerungsphase einsetzt. Hierdurch kann die gesamte zur Verfügung stehende Verdrehzeit für das Beschleunigen und Abbremsen verwendet werden und es ergeben sich besonders energieeffiziente Bewegungsprofile, wenn die zur Verfügung stehende Zeit in etwa hälftig in die Beschleunigungsphase und die Verzögerungsphase aufgeteilt wird.

Dabei ist es bevorzugt, dass eine Soll-Drehverzögerung bestimmt wird, welche gemäss dem Soll-Drehbeschleunigungsverlauf in der Verzögerungsphase vorliegen soll. Mit der bestimmten Soll-Drehverzögerung und den ermittelten Referenz-Parametern wird sodann über den aus dem Referenz-Beschleunigungslauf bekannten Zusammenhang zwischen der Referenz-Drehbeschleunigung, der Referenz-Winkelgeschwindigkeit, der Referenz-Verdrehzeit und/oder dem Referenz-Verdrehwinkel und dem Antriebsmoment des Servomotors und/oder dem Speisestrom des Servomotors ein Soll-Bremsmoment des Servomotors und/oder ein Soll-Bremsspeisestrom des Servomotors berechnet, bei welchem sich im bestimmungsgemässen Betrieb die Soll-Drehverzögerung ergibt. Anschliessend wird die Drehung der Verdrehstation mit dem Servomotor in der Verzögerungsphase des Verdrehinkrements unter Bereitstellung des Soll-Bremsmoments durch den Servomotor bzw. unter Speisung des Servomotors mit dem Soll-Bremsspeisestrom verzögert.

Auf diese Weise kann auch die Verzögerungsphase des Drehinkrements über den "Teach-In"-Betrieb in kürzester Zeit und ohne viel Erfahrung gezielt eingestellt und optimiert werden.

Eine weitere Optimierung wird möglich, wenn möglichst vorgängig zur Festlegung des Soll-Drehbeschleunigungsverlaufs der Verdrehstation das Reibverlust-Bremsmoment der Verdrehstation und/oder ein dem Reibverlust-Bremsmoment entsprechender Speisestrom ermittelt wird und bei der Festlegung des Soll-Drehbeschleunigungsverlaufs der Verdrehstation berücksichtigt wird. Dies kann beispielsweise derart geschehen, dass bei einem langsamen Verdrehen der Verdrehstation vorwärts und rückwärts der konstante Speisestrom oder das konstante Antriebsmoment des Servomotors ermittel wird.

Die Berücksichtigung des Reibverlust-Bremsmoments der Verdrehstation oder des entsprechenden Parameters geschieht mit Vorteil derart, dass der Soll-Drehbeschleunigungsverlauf infolge des Reibverlust-Bremsmoments beim Übergang von der Beschleunigungsphase in die Verzögerungsphase des Drehinkrements einen sprunghaften Winkelgeschwindigkeitsabfall aufweist. Unter Berücksichtigung dieses Aspekts kann der Soll-Drehbeschleunigungsverlauf dahingehend optimiert werden, dass die Beschleunigungsphase und/oder die Verzögerungsphase noch "sanfter" ausgelegt werden kann.

So ist es ebenfalls bevorzugt, wenn vorgängig zum Berechnen des Soll-Bremsmoments und/oder eines Soll-Bremsspeisestroms des Servomotors das Reibverlust-Bremsmoment der Verdrehstation und/oder ein dem Reibverlust entsprechender Speisestrom ermittelt wird und entsprechend bei der Berechnung des Soll-Bremsmoments und/oder des Soll-Bremsspeisestroms des Servomotors berücksichtigt wird.

In noch einer weiteren bevorzugten Ausführungsform des Verfahrens wird der Soll-Drehbeschleunigungsverlauf der Verdrehstation derartig festgelegt, dass die Soll-Drehverzögerung in der Verzögerungsphase des Drehinkrements zahlenwertmässig kleiner ist als die Soll-Drehbeschleunigung in der Beschleunigungsphase des Drehinkrements. Hierdurch wird ein Abklingen von allfälligen Schwingungen am Ende des Drehinkrements begünstigt.

Mit Vorteil wird das Reibverlust-Bremsmoment der Verdrehstation bzw. der dem Reibverlust-Bremsmoment entsprechende Speisestrom mit einem Testlauf ermittelt, bei welchem die Verdrehstation mit dem Servomotor mit bevorzugterweise gleichmässiger Winkelgeschwindigkeit verdreht wird, insbesondere vor und zurück verdreht wird, und zwar bevorzugterweise um einen Verdrehwinkel, welcher dem Verdrehwinkel der Verdrehstation pro Drehinkrement entspricht. Auf diese Weise herrschen bei der Ermittlung des Reibverlust-Bremsmoments der Verdrehstation bzw. des dem Reibverlust-Bremsmoment entsprechenden Speisestroms realistische Betriebsbedingungen.

Ein zweiter Aspekt der Erfindung betrifft eine Stanzpresse mit einem Paketierwerkzeug mit einer von einem Servomotor angetriebenen Verdrehstation, wobei die Stanzpresse eine Steuerung aufweist zum Betreiben der Verdrehstation gemäss dem zuvor dargelegten Verfahren entsprechend dem ersten Aspekt der Erfindung.

Dabei ist es bevorzugt, dass die Steuerung zum Betreiben der Verdrehstation in die Pressensteuerung integriert ist. Hierdurch wird ein einheitliches und zusammenhängendes System möglich und es können für die Pressensteuerung ohnehin vorhandene Steuerungsfunktionen für die Steuerung der Verdrehstation mitbenutzt werden.

### Kurze Beschreibung der Zeichnungen

Weitere bevorzugte Ausführungen der Erfindung ergeben sich aus den abhängigen Ansprüchen und aus der nun folgenden Beschreibung anhand der Figuren. Dabei zeigen:
Fig. 1 eine vereinfachte Darstellung des unteren Teils eines einspurigen Folgeschnittstanzwerkzeugs für die Herstellung von drei verschiedenen Blechpaketen für einen Elektromotor;
Fig. 2 die drei Blechpakete, welche mit dem Folgeschnittstanzwerkzeug gemäss Fig. 1 hergestellt werden, in der Draufsicht.
Fig. 3 einen Vertikalschnitt quer zur Banddurchlaufrichtung durch das Folgeschnittstanzwerkzeug aus Fig. 1 im Bereich einer der Verdrehstationen;
Fig. 4 die festgelegten Soll-Drehbeschleunigungsverläufe in Form der Winkelgeschwindigkeit der Verdrehstationen über das gesamte Verdrehinkrement;
Fig. 5 zeigt die Verläufe der Winkelgeschwindigkeiten der Verdrehstationen über der Zeit bei den Referenz-Beschleunigungsläufen;
Fig. 6 die Verläufe der Reibverlustbremsmomente der Verdrehstationen über der Zeit bei den Testläufen zu deren Ermittlung;
Fig. 7 die Winkelgeschwindigkeit des festgelegten Soll-Drehbeschleunigungsverlaufs der ersten Verdrehstation 5 über das gesamte Verdrehinkrement bei Berücksichtigung des ermittelten Reibverlust-Bremsmoments;
Fig. 8 die Winkelgeschwindigkeit des festgelegten Soll-Drehbeschleunigungsverlaufs der zweiten Verdrehstation 6 über das gesamte Verdrehinkrement bei Berücksichtigung des ermittelten Reibverlust-Bremsmoments; und
Fig. 9 die Winkelgeschwindigkeit des festgelegten Soll-Drehbeschleunigungsverlaufs der dritten Verdrehstation 7 über das gesamte Verdrehinkrement bei Berücksichtigung des ermittelten Reibverlust-Bremsmoments.

### Wege zur Ausführung der Erfindung

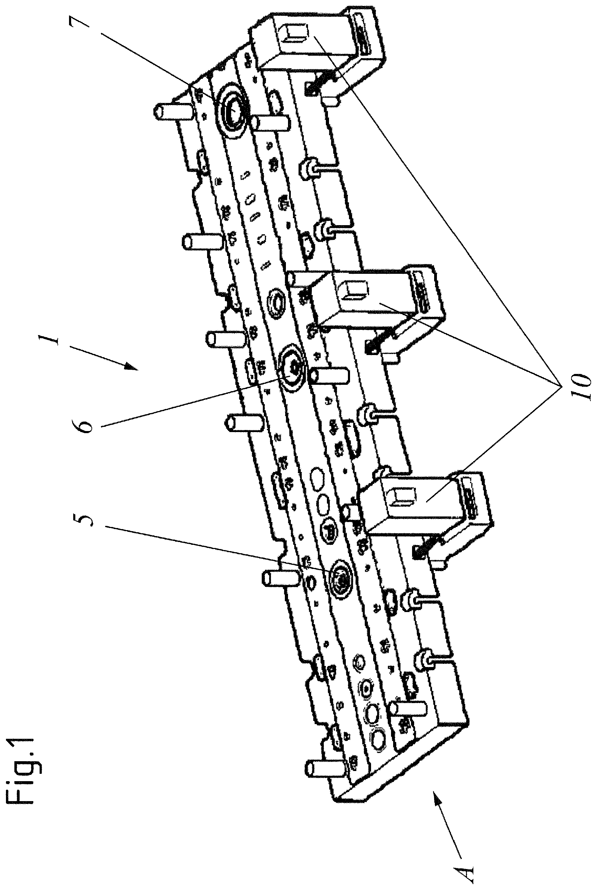

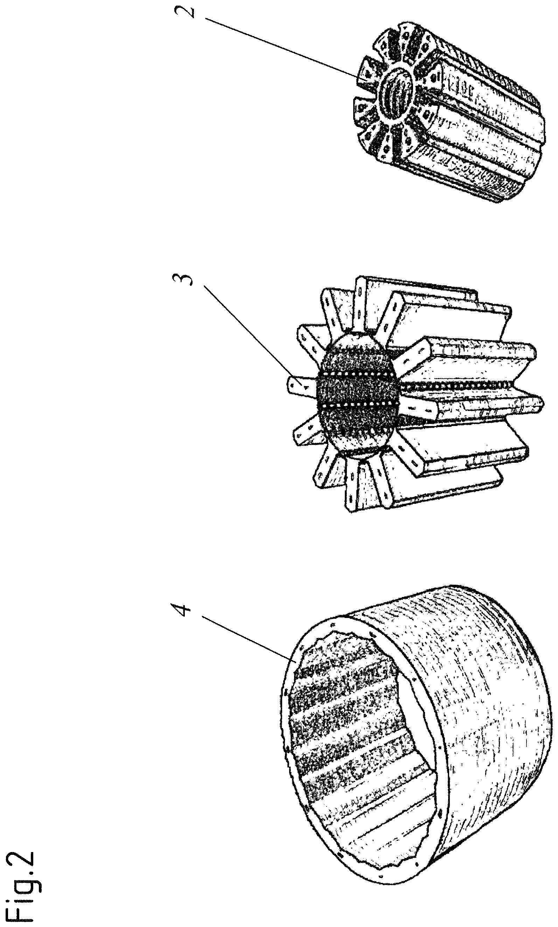

Fig. 1 zeigt eine vereinfachte Darstellung des unteren Teils eines einspurigen Folgeschnittstanzwerkzeugs 1 für die Herstellung der drei verschiedenen Blechpakete 2, 3, 4 für einen Elektromotor, welche in Fig. 2 in der Draufsicht gezeigt sind. Das erste Blechpaket 2 bildet den Rotor des Motors, das zweite Blechpaket 3 den Statorstern des Motors und das dritte Blechpaket 4 den Statorring des Motors.

Das Folgeschnittstanzwerkzeug 1 weist drei Verdrehstationen auf, die mit den Bezugsziffern 5, 6 und 7 bezeichnet sind. Die Bandlaufrichtung A durch das Werkzeug 1 verläuft im vorliegenden Fall von links nach rechts.

Der Fertigungsablauf im Werkzeug 1 beginnt mit dem kleinsten Teil. Entsprechend werden in der ersten Verdrehstation 5 die Rotor-Blechpakete 2 aufgestapelt, in der zweiten Verdrehstation 6 die Statorstern-Blechpakete 3 und in der dritten Verdrehstation 7 die Statorring-Blechpakete 4.

Die Verbindung von Blech zu Blech wird hier mit dem so genannten Durchsetzfügeverfahren bewirkt, welches dem Fachmann bekannt ist und deshalb hier nicht genauer beschrieben werden muss. Alternativen dazu wäre ein Verbinden der einzelnen Bleche mittels Laserschweissen, Backlack oder Leim.

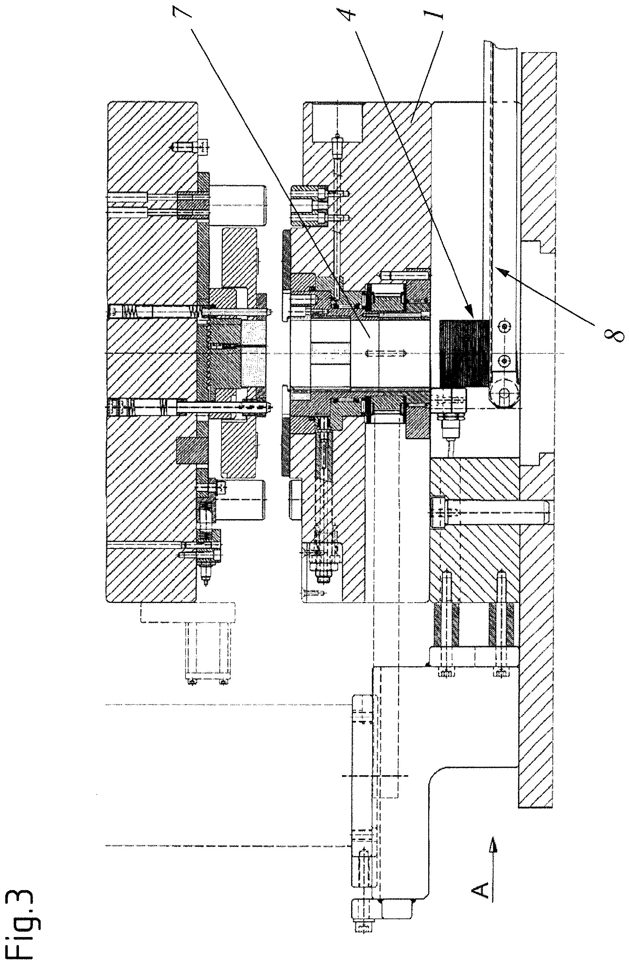

Fig. 3 zeigt einen Vertikalschnitt quer zur Bandlaufrichtung durch das Folgeschnittstanzwerkzeug 1 im Bereich der dritten Verdrehstation 7.

Ein Verdrehen der Blechstapel 2, 3, 4 während dem Aufstapeln ist deshalb erforderlich, weil über die Breite des zu verarbeitenden Blechbandes hinweg Blechdickenunterschiede bestehen können und diese immer an derselben Stelle aufgestapelt zu schiefen Blechpaketen führen würden. Mit der Drehung der Blechpakete wandern die mutmasslichen Blechdickenunterschiede im Kreis und das Resultat ist ein zylindrisches Paket.

Am Rotor-Blechpaket 2 erkennt man eine Teilung von 10. Somit ergibt sich für dieses Blechpaket 2 pro Verdrehinkrement D ein Verdrehwinkel von 36°. Der Statorstern hat 12 Strahlen, was für das Statorstern-Blechpaket 3 und das zugehörige Statorring-Blechpaket 4 ein Verdrehwinkel pro Verdrehinkrement D von 30° ergibt. Die Verdrehstationen 5, 6, 7 werden jeweils mittels Servomotoren 10 über einen Zahnriementrieb verdreht. Die Servomotoren 10 haben jeweils beispielsweise eine Leistung von 3000 W und ein Nenndrehmoment von 19,1 Nm. Die Pakethöhe wird durch Zählen der Einzelbleche und die gemessene Banddicke überwacht und gesteuert. Ist das Paket hoch genug, so werden über zuschaltbare Stempel die Durchsetzungen für das Durchsetzfügeverfahren ausgeschnitten damit eine Lücke entsteht, bevor mit dem Aufschichten des nächsten Paketes begonnen wird. Die fertigen Pakete - bei der in Fig. 3 dargestellten Situation sind es Statorring-Blechpakete 4 - fallen nach unten auf Förderbänder 8, welche sie quer zur Bandlaufrichtung vom Werkzeug 1 wegführen.

Die Verdrehstationen 5, 6, 7 dienen zudem auch als Blechpaketbremse. Sie müssen den nötigen Widerstand bieten, wenn die Einzelbleche zusammengefügt werden. Ein wichtiges Qualitätsmerkmal der fertigen Blechpakete 2, 3, 4 ist ihre Haltekraft. Diese wird im laufenden Fertigungsprozess mit Stichproben immer wieder überprüft.

Im vorliegenden Fall ist das Folgeschnittstanzwerkzeug 1 auf einem Stanzautomaten montiert, der im Betrieb mit 480 Hüben pro Minute betrieben wird. Es steht dabei ein Fenster über einen Kurbelwinkel von 300° für das Verdrehen der Verdrehstationen 5, 6, 7 zur Verfügung. Entsprechend steht pro Verdrehinkrement D von 36° bzw. 30° eine theoretische Verdrehzeit t von 104 ms zur Verfügung. Um sicherzustellen, dass am Ende der Drehbewegung noch genügend Zeit für das Entmagnetisieren bzw. Stromlossschalten des Antriebsmotors 10 und für das Abklingen allfälliger Schwingungen vorhanden ist, so dass ein oder mehrere Fangstifte die Feinjustierung der Verdrehstation vornehmen können, wird die theoretisch zur Verfügung stehende Verdrehzeit t pro Verdrehinkrement D von 104 ms um eine Zeitspanne t_{idle} von 4 ms verkürzt, und es wird für die Festlegung der Soll-Beschleunigungsverläufe der Verdrehstationen 5, 6, 7 von einer zur Verfügung stehenden Verdrehzeit t pro Verdrehinkrement D von 100 ms ausgegangen.

Die Servomotoren 10 müssen in weiten Bereichen unterschiedliche äussere Massenträgheiten beschleunigen. Diese hängen von den Aussenradien der Verdrehstationen in der vierten Potenz ab.

Zur Bestimmung der Soll-Parameter werden die Soll-Drehbeschleunigungsverläufe der Verdrehstationen 5, 6, 7 entsprechend festgelegt. Um ein möglichst energieeffizientes und materialschonendes Verdrehen der Blechpakete mit den Verdrehstationen 5, 6, 7 zu erreichen, wird die zur Verfügung stehende Verdrehzeit t von 100 ms gleichmässig auf die Beschleunigungsphase A und die Verzögerungsphase B des Verdrehinkrements D aufgeteilt, und zwar derart, dass diese unmittelbar aufeinander folgen. Mit anderen Worten soll also jeweils über die erste Hälfte des jeweiligen Verdrehwinkels pro Drehinkrement D beschleunigt werden und über die zweite Hälfte verzögert werden. Auf diese Weise werden unnötig starke Beschleunigungen und Verzögerungen vermieden.

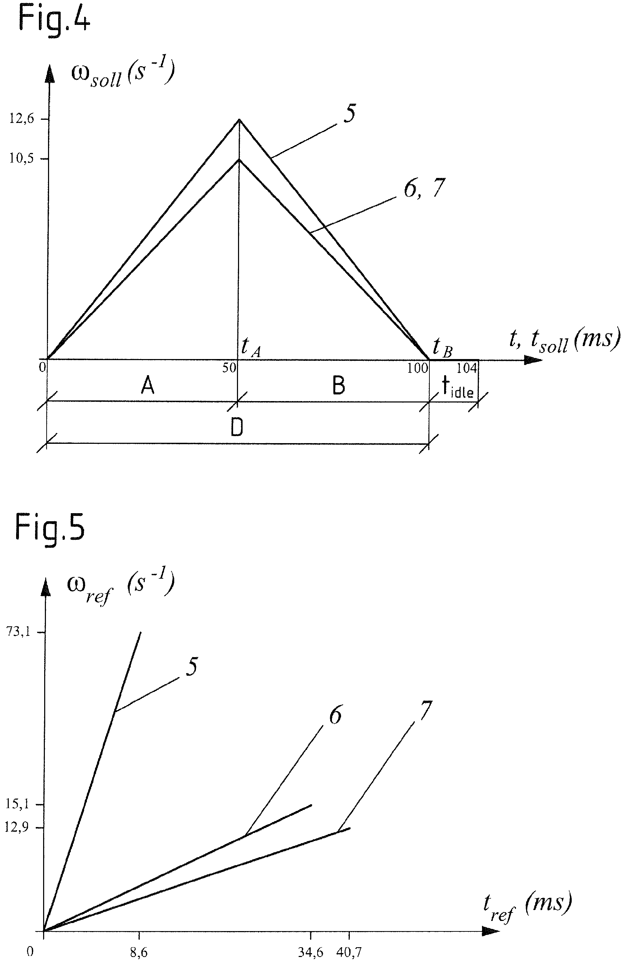

Die so festgelegten Soll-Drehbeschleunigungsverläufe für die Verdrehstationen 5, 6, 7 sind in Fig. 4 anhand der Winkelgeschwindigkeit ωₛₒₗₗ (s ⁻¹) über der Verdrehzeit t, tₛₒₗₗ (ms) dargestellt. Wie zu erkennen ist, beträgt die Beschleunigungszeit t_{A} 50 ms, die Verzögerungszeit t_{B} ebenfalls 50 ms und die Beruhigungszeit t_{idle} 4 ms. Wie ebenfalls zu erkennen ist, muss bei der ersten Verdrehstation 5 für die Rotor-Blechpakete 2 nach einer Verdrehzeit von 50 ms bzw. nach einem Verdrehwinkel von 18° eine Winkelgeschwindigkeit ωₛₒₗₗ von 12.6 s ⁻¹ erreicht werden, während bei der zweiten Verdrehstation 6 für die Statorstern-Blechpakete 3 und bei der dritten Verdrehstation 7 für die Statorring-Blechpakete 4 nach einer Verdrehzeit von 50 ms bzw. nach einem Verdrehwinkel von 15° jeweils identische Winkelgeschwindigkeiten ωₛₒₗₗ von 10.5 s ⁻¹ erreicht werden müssen. Entsprechend stärker muss bei der ersten Verdrehstation 5 für die Rotor-Blechpakete 2 beschleunigt und verzögert werden. Dies aufgrund des grösseren Verdrehwinkels pro Drehinkrement von 36° statt 30°. Da die festgelegten Soll-Drehbeschleunigungsverläufe bezüglich der Beschleunigungs- A und der Verzögerungsphasen B symmetrisch sind, ergeben sich für die Verzögerungsphasen B sinngemäss umgekehrte Soll-Parameter wie für die Beschleunigungsphasen A.

Mit den jeweils komplett ausgerüsteten und vollständig mit Blechpaketen 2, 3, 4 gefüllten Verdrehstationen 5, 6, 7 wird jeweils ein Referenz-Beschleunigungslauf über einen Referenz-Verdrehwinkel durchgeführt, welcher dem halben Verdrehwinkel der Verdrehstation pro Drehinkrement D entspricht. Entsprechend beträgt der Referenz-Verdrehwinkel für die ersten Verdrehstation 5 18° und für die zweite Verdrehstation 6 und die dritte Verdrehstationen 7 jeweils 15°. Dabei werden die Verdrehstationen 5, 6, 7 von den Servomotoren 10 jeweils mit dem Nenndrehmoment von 19.1 Nm angetrieben und die bei Erreichen der Referenz-Verdrehwinkel vorliegenden Referenz-Winkelgeschwindigkeiten ω_{ref} und Referenz-Verdrehzeiten t_{ref} festgehalten.

Die auf diese Weise ermittelten Referenz-Beschleunigungsverläufe für die Verdrehstationen 5, 6, 7 sind in Fig. 5 anhand der Winkelgeschwindigkeit ω_{ref} (s ⁻¹) über der Verdrehzeit t_{ref} (ms) dargestellt.

Wie zu erkennen ist, erreicht die erste Verdrehstation 5 für die Rotor-Blechpakete 2 den Referenz-Verdrehwinkel nach einer Referenz-Verdrehzeit t_{ref} von 8.6 ms und weist beim Referenz-Verdrehwinkel eine Referenz-Winkelgeschwindigkeit ω_{ref} von 73.1 s ⁻¹ auf, während die zweite Verdrehstation 6 für die Statorstern-Blechpakete 3 hierfür eine Referenz-Verdrehzeit t_{ref} von 34.6 ms benötigt und eine Referenz-Winkelgeschwindigkeit ω_{ref} von 15.1 s ⁻¹ erreicht und die dritte Verdrehstation 7 für die Statorring-Blechpakete 3 hierfür eine Referenz-Verdrehzeit t_{ref} von 40.7 ms benötigt und eine Referenz-Winkelgeschwindigkeit ω_{ref} von 12.9 s ⁻¹ erreicht.

Mit den aus den Referenz-Beschleunigungsläufen bekannten Zusammenhängen zwischen den Referenz-Winkelgeschwindigkeiten ω_{ref} bzw. den Referenz-Verdrehzeiten t_{ref} der Verdrehstationen 5, 6, 7 und den Referenz-Antriebsmomenten der zugeordneten Servomotoren 10 von 19.1 Nm werden sodann die Soll-Antriebsmomente der Servomotoren 10 errechnet, bei welchen sich die jeweiligen Soll-Winkelgeschwindigkeiten ωₛₒₗₗ bzw. Soll-Verdrehzeiten tₛₒₗₗ ergeben.

Hierzu werden die jeweiligen Soll-Parameter ωₛₒₗₗ, tₛₒₗₗ und Referenz-Parameter ω_{ref}, t_{ref} zueinander ins Verhältnis gesetzt und das Referenzantriebsmoment mit diesem Verhältnis multipliziert, was im Folgenden beispielhaft für die erste Verdrehstation 5 gezeigt wird.

Die für die Verdrehstation 5 bestimmte Soll-Winkelgeschwindigkeit ωₛₒₗₗ nach einem Verdrehwinkel von 18° ist 12.6 s ⁻¹. Die mit dem Referenz-Beschleunigungslauf dieser Verdrehstation 5 ermittelte Referenz-Winkelgeschwindigkeit ω_{ref} nach einem Verdrehwinkel von 18° beträgt 73.1 s ⁻¹. Als Verhältnis zwischen der bestimmten Soll-Winkelgeschwindigkeit ωₛₒₗₗ und der ermittelten Referenz-Winkelgeschwindigkeit ω_{ref} ergibt sich ein Faktor von 0.172. Multipliziert man diesen mit dem Referenz-Antriebsmoment des Servomotors 10 von 19.1 Nm so ergibt sich ein Soll-Antriebsmoment für die erste Verdrehstation 5 für die Rotor-Blechpakete 2 von 3.28 Nm. Das gleiche Ergebnis erhält man, wenn man die für die erste Verdrehstation 5 ermittelte Referenz-Verdrehzeit t_{ref} von 8.6 ms ins Verhältnis setzt zur bestimmten Soll-Verdrehzeit tₛₒₗₗ von 50 ms für einen Verdrehwinkel von 18°, was ein Verhältnis von 0.172 ergibt, und das Referenz-Antriebsmoment des Servomotors 10 von 19.1 Nm mit dieser Zahl multipliziert.

Für die zweite Verdrehstation 6 der Statorstern-Blechpakete 3 ergibt sich aus dieser Berechnung ein Soll-Antriebsmoment des Servomotors 10 von 13.23 Nm und für die dritte Verdrehstation 7 der Statorring-Blechpakete 4 ein Soll-Antriebsmoment des Servomotors 10 von 15.54 Nm. Die berechneten Soll-Antriebmomente für die Beschleunigungsphasen A stellen gleichzeitig auch die Soll-Bremsmomente für die Verzögerungsphasen B dar, einfach mit umgekehrter Kraftrichtung.

Bei einer Variante des zuvor beschriebenen "Teach-In"-Betriebs werden zusätzlich zu den Referenz-Beschleunigungsläufen weitere Testläufe zur Ermittlung der Reibverlust-Bremsmomente (Reibmomente) M (Nm) der einzelnen Verdrehstationen 5, 6, 7 durchgeführt und bei der Festlegung des Soll-Drehbeschleunigungsverläufe der Verdrehstationen 5, 6, 7 berücksichtigt.

Hierzu werden die Verdrehstationen 5, 6, 7 mit ihren Servomotoren 10 jeweils langsam um den halben Verdrehwinkel vor- und zurückverdreht. Dabei wird das Reibmoment M ermittelt, indem der Speisestrom oder das Antriebsmoment des Servomotors erfasst wird. Im Falle der Erfassung des Speisestroms ergibt sich das Antriebs- bzw. Reibmoment aus dem bekannten Zusammenhang zwischen Speisestrom und Antriebsmoment des Servomotors 10.

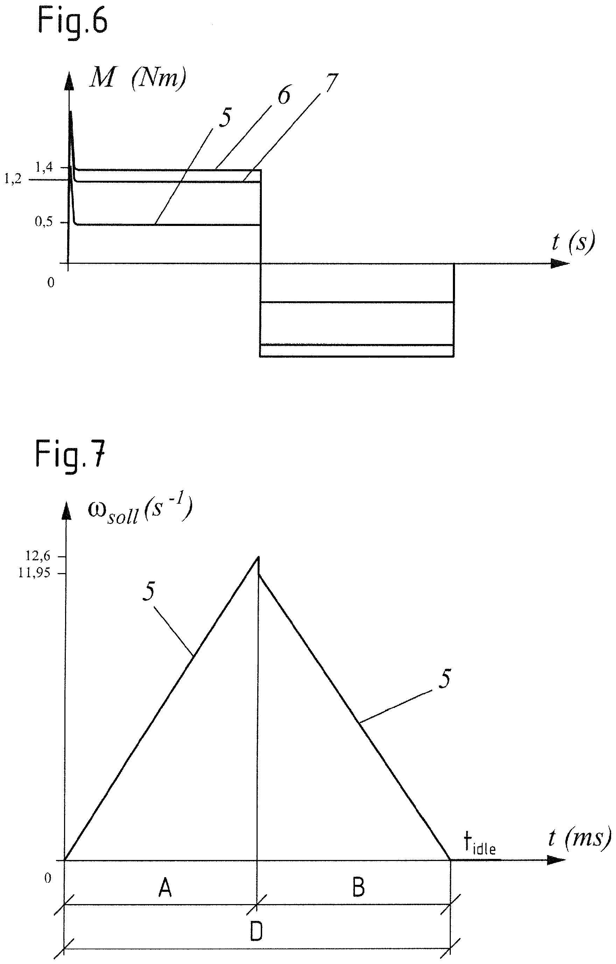

Fig. 6 zeigt die Verläufe der bei den Testläufen ermittelten Reibverlust-Bremsmomente M (Nm) der Verdrehstationen 5, 6, 7 über der Zeit t (s).

Die so ermittelten Reibmomente M, nämlich 0.5 Nm für die erste Verdrehstation 5, 1.4 Nm für die zweite Verdrehstation 6 und 1.2 Nm für die dritte Verdrehstation 7, werden nun je zweifach von den Beschleunigungsmomenten abgezogen und entsprechend als Verzögerungsmomente verwendet. Über die aus den Referenz-Beschleunigungsläufen bekannten Zusammenhänge können diese Verzögerungsmomente für die Festlegung eines Soll-Drehbeschleunigungsverlaufs gemäss Fig. 4 in Winkelgeschwindigkeiten umgewandelt und in den Verzögerungsphasen B entsprechend in Abzug gebracht werden.

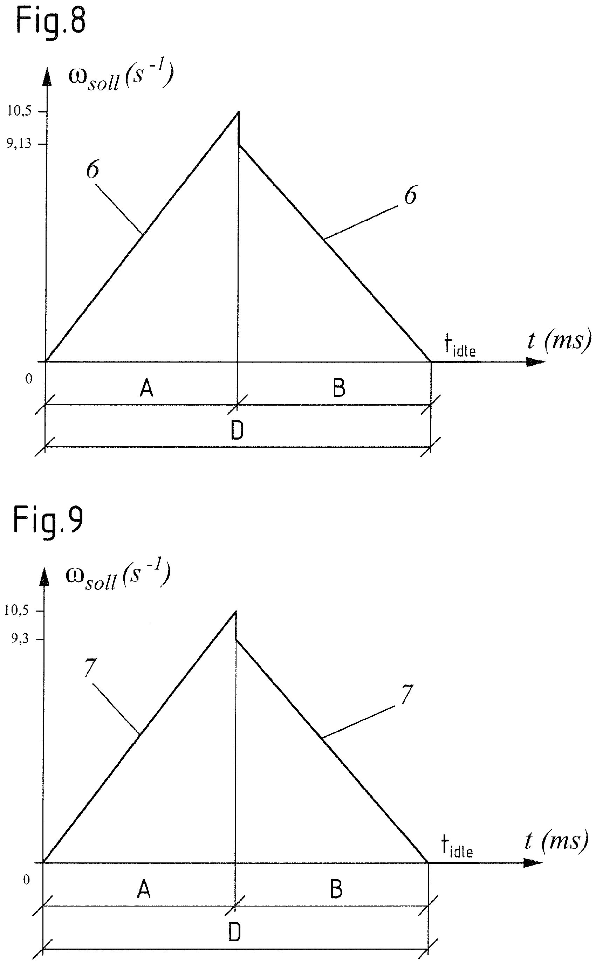

Die Figuren 7 bis 9 zeigen die auf diese Weise unter Berücksichtigung der ermittelten Reibverlust-Bremsmomente M festgelegten Soll-Drehbeschleunigungsverläufe der einzelnen Verdrehstationen 5, 6, 7 über das gesamte Verdrehinkrement D. Wie zu erkennen ist, fällt bei diesen Soll-Drehbeschleunigungsverläufen die Verzögerungsphase B noch sanfter aus als bei den in Fig. 4 gezeigten. Bei der Berechnung des jeweiligen Soll-Bremsmoments für die Verzögerrungsphase B wird das jeweilige Reibverlust-Bremsmoment M entsprechend berücksichtigt, indem von einer um das Zweifache des jeweils ermittelten Winkelgeschwindigkeitsanteils reduzierten Soll-Winkelgeschwindigkeit ωₛₒₗₗ beim Übergang von der Beschleunigungsphase A in die Verzögerrungsphase B ausgegangen wird.

Die zuvor beschriebenen Verfahrensschritte werden bei Aufruf einer entsprechenden "Teach-In"-Funktion automatisch durch die Steuerung des Stanzautomaten durchgeführt. Im regulären Betrieb des Stanzautomaten werden die Verdrehstationen 5, 6, 7 des Folgeschnittstanzwerkzeugs 1 anschliessend derartig gesteuert, dass die Servomotoren 10 für die Verdrehung der Verdrehstationen 5, 6, 7 die jeweiligen Soll-Antriebsmomente und Soll-Bremsmomente zur Verfügung stellen.

Es ist auch vorgesehen, dass nach dem eigentlichen "Teach-In" fortlaufend die pro Drehinkrement D zur Verfügung stehende Verdrehzeit t, welche von der Pressenhubzahl abhängig ist, ermittelt wird, die Soll-Drehbeschleunigungsverläufe entsprechend angepasst werden und mit den aus den Referenz-Beschleunigungsläufen bekannten Parametern neue Soll-Antriebmomente und Soll-Bremsmomente berechnet und zur Steuerung verwendet werden. Auf diese Weise können die Verdrehstationen 5, 6, 7 bei jeder Hubzahl des Stanzautomaten automatisch optimal betrieben werden.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zum Betreiben einer mit einem Servomotor (10) angetriebenen Verdrehstation (5, 6, 7) eines Paketierwerkzeugs für eine Stanzpresse, umfassend die Schritte:
a) Festlegen eines Soll-Drehbeschleunigungsverlaufs der Verdrehstation (5, 6, 7) in der Beschleunigungsphase (A) des Drehinkrements (D);
b) Durchführen eines Referenz-Beschleunigungslaufs der Verdrehstation (5, 6, 7) unter Bereitstellung eines bestimmten Referenz-Antriebsmoments durch den Servomotor (10) oder unter Speisung des Servomotors (10) mit einem bestimmten Referenz-Speisestrom;
c) Ermitteln eines oder mehrerer der folgenden Referenz-Parameter des Referenz-Beschleunigungslaufs:
c1) die über einen bestimmten Verdrehbereich erreichte Referenz-Drehbeschleunigung der Verdrehstation (5, 6, 7) oder des Servomotors (10);
c2) die bei Erreichen eines bestimmten Verdrehwinkels vorliegende Referenz-Winkelgeschwindigkeit (ω_{ref}) der Verdrehstation (5, 6, 7) oder des Servomotors (10);
c3) die bis zum Erreichen eines bestimmten Verdrehwinkels verstrichene Referenz-Verdrehzeit (t_{ref});
c4) der nach Verstreichen einer bestimmten Verdrehzeit vorliegenden Referenz-Verdrehwinkel;
d) Bestimmen einen oder mehrere der folgenden Soll-Parameter aus dem Soll-Drehbeschleunigungsverlauf:
d1) die Soll-Drehbeschleunigung, welche in einem bestimmten Verdrehbereich vorliegen soll;
d2) die Soll-Winkelgeschwindigkeit (ωₛₒₗₗ), welche bei Erreichen eines bestimmten Verdrehwinkels vorliegen soll;
d3) die Soll-Verdrehzeit (tₛₒₗₗ), welche bei Erreichen eines bestimmten Verdrehwinkels verstrichen sein soll;
d4) der Soll-Verdrehwinkel, welcher bei Erreichen einer bestimmten Verdrehzeit vorliegen soll;
e) Berechnen eines Soll-Antriebsmoments und/- oder eines Soll-Speisestroms des Servomotors, bei welchem sich die Soll-Drehbeschleunigung, die Soll-Winkelgeschwindigkeit (ωₛₒₗₗ), die Soll-Verdrehzeit (tₛₒₗₗ) und/oder der Soll-Verdrehwinkel ergibt, aus dem aus dem Referenz-Beschleunigungslauf bekannten Zusammenhang zwischen der Referenz-Drehbeschleunigung, der Referenz-Winkelgeschwindigkeit (ω_{ref}), der Referenz-Verdrehzeit (t_{ref}) und/oder dem Referenz-Verdrehwinkel und dem Antriebsmoment des Servomotors (10) und/oder dem Speisestrom des Servomotors (10); und sodann
f) Beschleunigen der Verdrehstation (5, 6, 7) mit dem Servomotor (10) im normalen Produktionsbetrieb in der Beschleunigungsphase (A) des Verdrehinkrements (D) unter Bereitstellung des Soll-Antriebsmoments durch den Servomotor (10) oder unter Speisung des Servomotors (10) mit dem Soll-Speisestrom.

2. Verfahren nach Anspruch 1, wobei ein Soll-Drehbeschleunigungsverlauf festgelegt wird, gemäss welchem die Verdrehstation (5, 6, 7) in der Beschleunigungsphase (A) des Drehinkrements (D) im Wesentlichen gleichmässig beschleunigt wird.

3. Verfahren nach einem der vorangehenden Ansprüche, wobei der Referenz-Beschleunigungslaufs unter Bereitstellung des Nenn-Antriebsmoments des Servomotors (10) als Referenz-Antriebsmoment oder unter Speisung des Servomotors (10) mit dem Nenn-Speisestrom als Referenz-Speisestrom durchgeführt wird.

4. Verfahren nach einem der vorangehenden Ansprüche, wobei der Verdrehwinkel der Verdrehstation pro Drehinkrement (D) bestimmt wird und der Referenz-Beschleunigungslauf über einen bestimmten Teil des Verdrehwinkels durchgeführt wird, insbesondere über den halben Verdrehwinkel.

5. Verfahren nach einem der Ansprüche 1 bis 3, wobei die zur Verfügung stehende Verdrehzeit pro Drehinkrement (D) bestimmt wird und der Referenz-Beschleunigungslauf über einen bestimmten Teil der Verdrehzeit durchgeführt wird, insbesondere über die halbe zur Verfügung stehende Verdrehzeit.

6. Verfahren nach einem der vorangehenden Ansprüche, wobei die zur Verfügung stehende Verdrehzeit pro Drehinkrement (D) und der Verdrehwinkel der Verdrehstation pro Drehinkrement (D) bestimmt werden und ein Soll-Drehbeschleunigungsverlauf festgelegt wird, gemäss welchem der halbe Verdrehwinkel bei Ablauf oder nach Ablauf der halben zur Verfügung stehenden Verdrehzeit erreicht wird.

7. Verfahren nach Anspruch 6, wobei ein Soll-Drehbeschleunigungsverlauf festgelegt wird, gemäss welchem bei Erreichen oder nach Erreichen des halben Verdrehwinkels die Beschleunigungsphase des Drehinkrements (D) abgeschlossen ist.

8. Verfahren nach einem der Ansprüche 5 bis 7, wobei die zur Verfügung stehende Verdrehzeit pro Drehinkrement (D) derart bestimmt wird, dass eine theoretisch pro Drehinkrement zur Verfügung stehende Verdrehzeit um eine Zeitspanne (t_{idle}) reduziert wird, welche am Ende der Drehbewegung für eine Beruhigung des Systems vorgesehen ist.

9. Verfahren nach einem der Ansprüche 5 bis 8, wobei die zur Verfügung stehenden Verdrehzeit pro Drehinkrement (D) oder die theoretisch pro Drehinkrement (D) zur Verfügung stehende Verdrehzeit in Abhängigkeit von der Zielhubzahl der Presse oder in Abhängigkeit von der aktuellen Hubzahl der Presse bestimmt wird.

10. Verfahren nach einem der vorangehenden Ansprüche, wobei der Soll-Drehbeschleunigungsverlauf der Verdrehstation über das gesamte Drehinkrement (D) festgelegt wird, insbesondere derart, dass direkt im Anschluss an die Beschleunigungsphase (A) die Verzögerungsphase (B) einsetzt.

11. Verfahren nach Anspruch 10, des Weiteren umfassend die Schritte:
g) Bestimmen einer Soll-Drehverzögerung, welche gemäss dem Soll-Drehbeschleunigungsverlauf in der Verzögerungsphase (B) vorliegen soll;
h) Berechnen eines Soll-Bremsmoments und/oder eines Soll-Bremsspeisestroms des Servomotors (10), bei welchem sich die Soll-Drehverzögerung ergibt, aus dem aus dem Referenz-Beschleunigungslauf bekannten Zusammenhang zwischen der Referenz-Drehbeschleunigung, der Referenz-Winkelgeschwindigkeit (ω_{ref}), der Referenz-Verdrehzeit (t_{ref}) und/oder dem Referenz-Verdrehwinkel und dem Antriebsmoment des Servomotors (10) und/oder dem Speisestrom des Servomotors (10);und
i) Verzögern der Drehung der Verdrehstation (5, 6, 7) mit dem Servomotor (10) in der Verzögerungsphase (B) des Verdrehinkrements (D) unter Bereitstellung des Soll-Bremsmoments durch den Servomotor (10) oder unter Speisung des Servomotors (10) mit dem Soll-Bremsspeisestrom.

12. Verfahren nach einem der Ansprüche 10 bis 11, wobei, insbesondere vorgängig zur Festlegung des Soll-Drehbeschleunigungsverlaufs der Verdrehstation (5, 6, 7), das Reibverlust-Bremsmoment der Verdrehstation (5, 6, 7) und/oder ein dem Reibverlust-Bremsmoment entsprechender Speisestrom ermittelt wird und bei der Festlegung des Soll-Drehbeschleunigungsverlaufs der Verdrehstation (5, 6, 7) berücksichtigt wird, insbesondere derart, dass es infolge des Reibverlust-Bremsmoments beim Übergang von der Beschleunigungsphase (A) in die Verzögerungsphase (B) des Drehinkrements (D) zu einem sprunghaften Winkelgeschwindigkeitsabfall kommt.

13. Verfahren nach einem der Ansprüche 11 bis 12, wobei vorgängig zum Berechnen des Soll-Bremsmoments und/oder eines Soll-Bremsspeisestroms des Servomotors (10) das Reibverlust-Bremsmoment der Verdrehstation (5, 6, 7) und/oder ein dem Reibverlust entsprechender Speisestrom ermittelt wird und bei der Berechnung des Soll-Bremsmoments und/oder des Soll-Bremsspeisestroms des Servomotors berücksichtigt wird.

14. Verfahren nach einem der Ansprüche 10 bis 13, wobei der Soll-Drehbeschleunigungsverlauf der Verdrehstation (5, 6, 7) derartig festgelegt wird, dass die Soll-Drehverzögerung in der Verzögerungsphase (B) des Drehinkrements (D) zahlenwertmässig kleiner ist als die Soll-Drehbeschleunigung in der Beschleunigungsphase des Drehinkrements (D).

15. Verfahren nach einem der Ansprüche 12 bis 14, wobei das Reibverlust-Bremsmoment der Verdrehstation (5, 6, 7) und/oder der dem Reibverlust-Bremsmoment entsprechende Speisestrom mit einem Testlauf ermittelt wird, bei welchem die Verdrehstation (5, 6, 7) mit dem Servomotor (10) mit insbesondere gleichmässiger Winkelgeschwindigkeit verdreht wird, insbesondere vor und zurück verdreht wird, insbesondere um einen Verdrehwinkel, weleher dem halben Verdrehwinkel der Verdrehstation (5, 6, 7) pro Drehinkrement (D) entspricht.

16. Stanzpresse mit einem Paketierwerkzeug mit einer von einem Servomotor (10) angetriebenen Verdrehstation (5, 6, 7), wobei die Stanzpresse eine Steuerung aufweist zum Betreiben der Verdrehstation (5, 6, 7) gemäss dem Verfahren nach einem der vorangehenden Ansprüche.

17. Stanzpresse nach Anspruch 16, wobei die Steuerung zum Betreiben der Verdrehstation (5, 6, 7) in die Pressensteuerung integriert ist.

## Claims

1. Method for operating a servo motor (10) driven turning station (5, 6, 7) of a stacking tool for a punch press, comprising the steps of:
a) determining a target rotational acceleration curve of the turning station (5, 6, 7) in the acceleration phase (A) of the turning increment (D);
b) carrying out a reference acceleration run of the turning station (5, 6, 7) while providing a certain reference drive torque by the servo motor (10) or while supplying the servo motor (10) with a certain reference supply current;
c) determining one or more of the following reference parameters of the reference acceleration run:
c1) the reference turning acceleration of the turning station (5, 6, 7) or of the servo motor (10) achieved over a certain turning range;
c2) the reference angular velocity (ω_{ref}) of the turning station (5, 6, 7) or of the servo motor (10) when a certain turning angle is reached;
c3) the reference turning time (t_{ref}) elapsed until a certain turning angle is reached;
c4) the reference turning angle after a certain turning time has elapsed;
d) determining one or more of the following target parameters from the target turning acceleration curve:
d1) the target turning acceleration, which is to be present in a certain turning range;
d2) the target angular velocity (ωₛₒₗₗ), which should be present when a certain turning angle is reached;
d3) the target turning time (tₛₒₗₗ) which is to be present when a certain turning angle is reached;
d4) the target turning angle, which should be present when a certain turning time is reached;
e) calculating a target drive torque and/or a target supply current of the servo motor, at which the target turning acceleration, the target angular velocity (ωₛₒₗₗ), the target turning time (tₛₒₗₗ) and/or the target turning angle results, from the relationship, known from the reference acceleration run, between the reference turning acceleration, the reference angular velocity (ω_{ref}), the reference turning time (t_{ref}) and/or the reference turning angle and the drive torque of the servo motor (10) and/or the supply current of the servo motor (10); and thereafter
f) accelerating the turning station (5, 6, 7) with the servo motor (10) in normal production operation in the acceleration phase (A) of the turning increment (D) while providing the target drive torque by the servo motor (10) or while supplying the servo motor (10) with the target supply current.

2. Method according to claim 1, wherein a target turning acceleration curve is determined, according to which the turning station (5, 6, 7) is accelerated substantially uniformly in the acceleration phase (A) of the turning increment (D).

3. Method according to one of the preceding claims, wherein the reference acceleration curve is performed while providing the nominal drive torque of the servo motor (10) as the reference drive torque or while supplying the servo motor (10) with the nominal supply current as the reference supply current.

4. Method according to one of the preceding claims, wherein the turning angle of the turning station is determined per turning increment (D) and the reference acceleration run is performed over a certain part of the turning angle, in particular over half the turning angle.

5. Method according to one of claims 1 to 3, wherein the available turning time per turning increment (D) is determined and the reference acceleration run is performed over a certain part of the turning time, in particular over half the available turning time.

6. Method according to one of the preceding claims, wherein the available turning time per turning increment (D) and the turning angle of the turning station per turning increment (D) are determined and a target turning acceleration curve is defined, according to which half the turning angle is reached at the end or after the end of half the available turning time.

7. Method according to claim 6, wherein a target turning acceleration curve is defined, according to which the acceleration phase of the turning increment (D) is completed when the half of the turning angle is reached or after it is reached.

8. Method according to one of the claims 5 to 7, wherein the available turning time per turning increment (D) is determined in such a way that a theoretically available turning time per turning increment is reduced by a time period (t_{idle}) which is provided at the end of the turning movement for a stabilization of the system.

9. Method according to one of the claims 5 to 8, wherein the available turning time per turning increment (D) or the theoretically available turning time per turning increment (D) is determined as a function of the target stroke rate of the press or as a function of the current stroke rate of the press.

10. Method according to one of the preceding claims, wherein the target turning acceleration curve of the turning station is defined over the entire turning increment (D), in particular in such a way that the deceleration phase (B) starts directly after the acceleration phase (A).

11. Method according to claim 10, further comprising the steps of:
g) determining a target turning deceleration which should be present in the deceleration phase (B) according to the target turning acceleration curve;
h) calculating a target braking torque and/or a target braking supply current of the servo motor (10), at which the target turning deceleration results, from the relationship, known from the reference acceleration run, between the reference turning acceleration, the reference angular velocity (ω_{ref}), the reference turning time (t_{ref}) and/or the reference turning angle and the drive torque of the servo motor (10) and/or the supply current of the servo motor (10); and
i) decelerating the turning of the turning station (5, 6, 7) with the servo motor (10) in the deceleration phase (B) of the turning increment (D) with provision of the target braking torque by the servo motor (10) or with supply of the servo motor (10) with the target braking supply current.

12. Method according to one of the claims 10 to 11, wherein, in particular prior to the determination of the target turning acceleration curve of the turning station (5, 6, 7), the friction loss braking torque of the turning station (5, 6, 7) and/or a supply current corresponding to the friction loss braking torque is determined and is taken into account in the determination of the target turning acceleration curve of the turning station (5, 6, 7), in particular in such a way that, as a result of the friction loss braking torque during the transition from the acceleration phase (A) to the deceleration phase (B) of the turning increment (D) as a result of the friction loss braking torque, there is a sudden drop in angular velocity.

13. Method according to one of the claims 11 to 12, wherein the friction loss braking torque of the turning station (5, 6, 7) and/or or a supply current corresponding to the friction loss is calculated before calculating the target braking torque and/or a target braking supply current of the servo motor (10) and is taken into account in the calculation of the target braking torque and/or the target braking supply current of the servo motor.

14. Method according to one of the claims 10 to 13, wherein the target turning acceleration curve of the turning station (5, 6, 7) is determined in such a way that the target turning deceleration in the deceleration phase (B) of the turning increment (D) is numerically smaller than the target turning acceleration in the acceleration phase of the turning increment (D).

15. Method according to one of the claims 12 to 14, wherein the friction loss braking torque of the turning station (5, 6, 7) and/or the supply current corresponding to the friction loss braking torque is determined with a test run, during which the turning station (5, 6, 7) is turned by the servo motor (10) with in particular uniform angular velocity, in particular is turned back and forth, in particular by a turning angle which corresponds to half the turning angle of the turning station (5, 6, 7) per turning increment(D).

16. Punch press with a stacking tool with a turning station (5, 6, 7) driven by a servo motor (10), wherein the punch press has a control for operating the turning station (5, 6, 7) in accordance with the method according to one of the preceding claims.

17. Punch press according to claim 16, wherein the control for operating the turning station (5, 6, 7) is integrated into the press control.

## Revendications

1. Procédé d'opération d'une station de tournage (5, 6, 7) entraînée par un servomoteur (10) d'un outil d'empilage pour une poinçonneuse, comprenant les étapes de :
a) déterminer une courbe d'accélération de rotation cible de la station de rotation (5, 6, 7) dans la phase d'accélération (A) de l'incrément de rotation (D) ;
b) effectuer une course d'accélération de référence de la station de tournage (5, 6, 7) tout en fournissant un certain couple d'entraînement de référence au servomoteur (10) ou tout en alimentant le servomoteur (10) avec un certain courant d'alimentation de référence;
c) déterminer un ou plusieurs des paramètres de référence suivants de la course d'accélération de référence :
c1) l'accélération de rotation de référence de la station de rotation (5, 6, 7) ou du servomoteur (10) obtenue sur une certaine plage de rotation ;
c2) la vitesse angulaire de référence (ω_{ref} ) de la station de rotation (5, 6, 7) ou du servomoteur (10) lorsqu'un certain angle de rotation est atteint ;
c3) le temps de rotation de référence (t_{ref} ) écoulé jusqu'à ce qu'un certain angle de rotation soit atteint ;
c4) l'angle de rotation de référence après un certain temps de rotation ;
d) déterminer un ou plusieurs des paramètres cibles suivants à partir de la courbe d'accélération de rotation cible :
d1) l'accélération cible de rotation, qui doit être présente dans une certaine plage de rotation ;
d2) la vitesse angulaire cible (ωₛₒₗₗ ), qui doit être présente lorsqu'un certain angle de rotation est atteint ;
d3) le temps de rotation cible (tₛₒₗₗ ) qui doit être présent lorsqu'un certain angle de rotation est atteint ;
d4) l'angle de rotation cible qui doit être présent lorsqu'un certain temps de rotation est atteint ;
e) calculer un couple d'entraînement cible et/ou un courant d'alimentation cible du servomoteur, pour lequel l'accélération de rotation cible, la vitesse angulaire cible (ωₛₒₗₗ ), le temps de rotation cible (tₛₒₗₗ ) et/ou l'angle de rotation cible résultent de la relation, connue à partir de la course d'accélération de référence, entre l'accélération de rotation de référence, la vitesse angulaire de référence (ω_{ref} ), le temps de rotation de référence (t_{ref} ) et/ou l'angle de rotation de référence et le couple d'entraînement du servomoteur (10) et/ou le courant d'alimentation du servomoteur (10) ; et ensuite
f) accélérer la station de tournage (5, 6, 7) avec le servomoteur (10) en mode de production normal dans la phase d'accélération (A) de l'incrément de tournage (D) tout en fournissant le couple d'entraînement cible par le servomoteur (10) ou tout en alimentant le servomoteur (10) avec le courant d'alimentation cible.

2. Procédé selon la revendication 1, dans lequel une courbe d'accélération de rotation cible est déterminée, selon laquelle la station de rotation (5, 6, 7) est accélérée de manière essentiellement uniforme dans la phase d'accélération (A) de l'incrément de rotation (D) .

3. Procédé selon l'une des revendications précédentes, dans lequel la courbe d'accélération de référence est réalisée en fournissant le couple d'entraînement nominal du servomoteur (10) en tant que couple d'entraînement de référence ou en alimentant le servomoteur (10) avec le courant d'alimentation nominal en tant que courant d'alimentation de référence.

4. Procédé selon l'une des revendications précédentes, dans lequel l'angle de rotation de la station de rotation est déterminé par incrément de rotation (D) et la course d'accélération de référence est effectuée sur une certaine partie de l'angle de rotation, en particulier sur la moitié de l'angle de rotation.

5. Procédé selon l'une des revendications 1 à 3, dans lequel le temps de rotation disponible par incrément de rotation (D) est déterminé et la course d'accélération de référence est effectuée sur une certaine partie du temps de rotation, en particulier sur la moitié du temps de rotation disponible.

6. Procédé selon l'une des revendications précédentes, dans lequel le temps de rotation disponible par incrément de rotation (D) et l'angle de rotation de la station de rotation par incrément de rotation (D) sont déterminés et une courbe d'accélération de rotation cible est définie, selon laquelle la moitié de l'angle de rotation est atteinte à la fin ou après la fin de la moitié du temps de rotation disponible.

7. Procédé selon la revendication 6, dans lequel une courbe d'accélération de rotation cible est définie, selon laquelle la phase d'accélération de l'incrément de rotation (D) est achevée lorsque la moitié de l'angle de rotation est atteinte ou après qu'elle est atteinte.

8. Procédé selon l'une des revendications 5 à 7, dans lequel le temps de rotation disponible par incrément de rotation (D) est déterminé de telle sorte que le temps de rotation théoriquement disponible par incrément de rotation est réduit d'une période de temps (t_{idle}) qui est prévue à la fin du mouvement de rotation pour la stabilisation du système.

9. Procédé selon l'une des revendications 5 à 8, dans lequel le temps de rotation disponible par incrément de rotation (D) ou le temps de rotation théoriquement disponible par incrément de rotation (D) est déterminé en fonction de la vitesse de course cible de la presse ou en fonction de la vitesse de course actuelle de la presse.

10. Procédé selon l'une des revendications précédentes, dans lequel la courbe d'accélération cible de la station de rotation est définie sur l'ensemble de l'incrément de rotation (D), notamment de manière à ce que la phase de décélération (B) commence directement après la phase d'accélération (A).

11. Procédé selon la revendication 10, comprenant en outre les étapes de :
g) déterminer une décélération de rotation cible qui devrait être présente dans la phase de décélération (B) en fonction de la courbe d'accélération de rotation cible ;
h) calculer un couple de freinage cible et/ou un courant d'alimentation de freinage cible du servomoteur (10), auquel résulte la décélération de rotation cible, à partir de la relation, connue à partir de la course d'accélération de référence, entre l'accélération de rotation de référence, la vitesse angulaire de référence (ω_{ref} ), le temps de rotation de référence (t_{ref} ) et/ou l'angle de rotation de référence et le couple d'entraînement du servomoteur (10) et/ou le courant d'alimentation du servomoteur (10) ; et
i) décélérer la rotation de la station de rotation (5, 6, 7) avec le servomoteur (10) dans la phase de décélération (B) de l'incrément de rotation (D) en fournissant le couple de freinage cible par le servomoteur (10) ou en alimentant le servomoteur (10) avec le courant d'alimentation de freinage cible.

12. Procédé selon l'une des revendications 10 à 11, dans lequel, en particulier avant la détermination de la courbe d'accélération de rotation cible de la station de rotation (5, 6, 7), le couple de freinage à perte de friction de la station de rotation (5, 6, 7) et/ou un courant d'alimentation correspondant au couple de freinage à perte de friction est déterminé et est pris en compte dans la détermination de la courbe d'accélération de rotation cible de la station de rotation (5, 6, 7), en particulier de manière à ce que, en raison du couple de freinage à perte de friction, lors de la transition de la phase d'accélération (A) à la phase de décélération (B) de l'incrément de rotation (D) en raison du couple de freinage à perte de friction, il y ait une chute soudaine de la vitesse angulaire.

13. Procédé selon l'une des revendications 11 à 12, dans lequel le couple de freinage à perte de friction de la station de tournage (5, 6, 7) et/ou un courant d'alimentation correspondant à la perte de friction est calculé avant le calcul du couple de freinage cible et/ou d'un courant d'alimentation de freinage cible du servomoteur (10) et est pris en compte dans le calcul du couple de freinage cible et/ou du courant d'alimentation de freinage cible du servomoteur.

14. Procédé selon l'une des revendications 10 à 13, dans lequel la courbe d'accélération de rotation cible de la station de rotation (5, 6, 7) est déterminée de telle sorte que la décélération de rotation cible dans la phase de décélération (B) de l'incrément de rotation (D) soit numériquement inférieure à l'accélération de rotation cible dans la phase d'accélération de l'incrément de rotation (D).

15. Procédé selon l'une des revendications 12 à 14, dans lequel le couple de freinage à perte de friction de la station de tournage (5, 6, 7) et/ou le courant d'alimentation correspondant au couple de freinage à perte de friction est déterminé par un essai de fonctionnement, au cours duquel la station de tournage (5, 6, 7) est tournée par le servomoteur (10) avec en particulier une vitesse angulaire uniforme, en particulier dans un sens et dans l'autre, en particulier d'un angle de rotation qui correspond à la moitié de l'angle de rotation de la station de tournage (5, 6, 7) par incrément de rotation(D).

16. Poinçonneuse avec un outil d'empilage avec une station de tournage (5, 6, 7) entraînée par un servomoteur (10), la poinçonneuse ayant une commande pour faire fonctionner la station de tournage (5, 6, 7) conformément au procédé selon l'une des revendications précédentes.

17. Poinçonneuse selon la revendication 16, dans laquelle la commande de la station de tournage (5, 6, 7) est intégrée dans la commande de la poinçonneuse.
